# EUROPEAN PATENT SPECIFICATION

(11) **EP 2 677 154 B1**
(45) Date of publication and mention of the grant of the patent: **28.11.2018**
(21) Application number: 12290200.0
(22) Date of filing: 19.06.2012
(51) Int. Cl.: F02M 35/10, B29C 45/00

(54) **Line system for a fluid, method of manufacturing a line system and apparatus for manufacturing a line system**
Leitungssystem für eine Flüssigkeit, Verfahren zur Herstellung eines Leitungssystems und Vorrichtung zur Herstellung eines Leitungssystems
Système de ligne pour un fluide, procédé de fabrication d'un système de ligne et appareil de fabrication d'un système de ligne

(43) Date of publication of application: 25.12.2013
(73) Proprietor: MANN+HUMMEL GmbH, 71636 Ludwigsburg (DE)
(72) Inventor: Girard, Dominique, 53970 Montigné le Brillant (FR); Foulboeuf, Gwenael, 53260 Etrammes (FR); Sarrazin, Maxime, 53260 Entrammes (FR)

(56) References cited:
- EP-A1- 0 913 242
- US-A- 5 806 480
- US-A1- 2006 125 149
- US-A1- 2011 316 195

## Description

### Technical Field

The present invention relates to a line system for a fluid, in particular an air duct, in particular of an internal combustion engine, in particular of a motor vehicle, having at least one first duct part and at least one second duct part made of different materials which are connected to each other.

The invention relates further to a method of manufacturing a line system for a fluid, in particular an air duct, in particular of an internal combustion engine, in particular of a motor vehicle, wherein at least one first duct part is made of a first material and at least one second duct part is made of a second material and the at least one first duct part and the at least one second duct part are connected to each other.

Further the invention relates to an apparatus for manufacturing a line system for a fluid, in particular an air duct, in particular of an internal combustion engine, in particular of a motor vehicle with a device for connecting at least one first duct part made of a first material with at least one second duct part made of a second material.

### State of Technology

An air duct of an internal combustion engine of a motor vehicle known from the market has two rigid duct parts which are connected by a bellows. The bellows is flexible and allows a relative movement between the two rigid duct parts. The bellows is made of plastic by a blow molding process using a mold. The rigid duct parts are made of a different material by injection molding or blow molding. The ends of the bellows each are welded airtight to the respective rigid duct parts.

From EP 0 913 242 A1 a clean air duct and methods for the manufacture thereof are known. A clean air duct comprises a first blow molded tubular body having a first open end and an annular ring which terminates at an inwardly extending lip, and a second blow molded tubular body which has an open end. A cuff connects the blow molded tubular bodies to one another wherein the lip exerts a compressive sealing force around the second tubular body. Both tubular bodies extend from the cuff in the same direction. It is an object of the invention to provide a line system, a method of manufacturing and an apparatus for manufacturing a line system which easy realizes a connection between the at least one first duct part and the at least one second duct part with as few procedural steps as possible. In particular the connection should be realized without welding.

### Disclosure of Invention

The object is achieved by that the at least one second duct part is an extrusion blow molding article which is extruded in a mold to the at least one first duct part.

Advantageously, the at least two duct parts which have to be connected have different features. In particular the duct parts can be different in mechanical stability, temperature resistance, thermal conductivity and/or electrical conductivity. The at least two duct parts are easy connected by the way of overmolding. The at least first duct part can be precasted. It can be realized by injection molding or another method. The at least first duct part can be straight or bent. The at least one first duct part can have at least one sealed opening for inserting and removing of at least one tool for realizing the at least one second duct part and/or the connection to the at least one second duct part. The at least one second duct part is obtained by extrusion blow molding. Thereby extruded material is blown to a section for connection of the at least one first duct part for connecting the at least one second duct part directly to the at least one first duct part by overmolding. In an early step of the extrusion blow molding process at least a parison for the at least second duct part can be obtained and simultaneously be connected to the at least first duct part. In a further step the parison can be inflated in an adequate mold to realize the form of the at least one second duct part. After the extrusion blow molding process the at least one first duct part and the at least one second duct part can be cooled in the mold in order to solidify the duct parts and the connection between the duct parts. The cooling can be obtained by the heat exchange with the mold and/or a inflating gas, in particular inflating air which can be blown into the parison. Air can be blown in for inflating the parison.

According to a favourable embodiment of the invention, the at least one second duct part can be pliable. Favorably the material of this at least second duct part can be flexible. The material can be flexible plastics. By the pliable second duct part the at least one first duct part can be connected flexible with another duct part or another supply point, in particular a flange of a housing.

Particularly, the at least one second duct part can be a bellows. The bellows can be formed elastic without losing his original shape. The bellows can be lengthened and shortened and bend without collapsing. With the bellows the at least one first duct can be connected movable to another duct part.

According to a further favourable embodiment of the invention, the at least one first duct part can be rigid. A rigid duct part can have a high mechanical stability. It can be prevented that the at least one first duct part changes its shape as a reaction on external forces.

According to a further favourable embodiment of the invention, the at least one second duct part can be connected with its ends each to a duct part which can be made of different materials than the least one second duct part. So the at least one second duct part connects the two other duct parts. Particularly a pliable second duct part allows a relative movement between the two other duct parts. Favorably the two duct parts which are connected by the at least one second duct part are made of the same material.

The object further is achieved by the method by that the second material is extruded to a parison and molded over a section for connection of the at least first duct part, the parison is inflated to form the at least one second duct part. All features and advantages of the inventive line system apply analogous to the inventive method and its favorable embodiments. Advantageously a parison is extruded on the behalf of the at least second duct part. The parison can be extruded by an extruder. The extruder can be a mini-extruder. The extruder can be moved while extruding the second material. The extruder can be integrated in a mold for forming the at least one second duct part.
According to the invention the parison is extruded in the mold. Particularly the parison can be formed to a bellows.

According to a favourable embodiment of the invention, the at least first duct part and an extruder can be placed in an injection mold for the at least one second duct part, the second material can be extruded by the extruder for overmolding the section for connection of the at least first duct part, the extruder can be moved away from the at least first duct part while extruding the second material to the parison. In the beginning of the process the extruder can be placed nearby the at least one first duct part to enable the overmolding of the second material on the section for connection of the at least first duct part. Then the extruder can be moved for realizing the parison. The extrusion can stop at the end of the extruder stroke. Advantageously the extruder can move from the at least first duct part to a third duct part which is placed apart from the at least first duct part. The third duct part can be similar to the at least first duct part. In particular the third duct part can be rigid as well. The second material can be extruded by the extruder for overmolding the section for connection of the at least one first duct part and a respective section for connection of the third duct part. The parison is extruded in a way that it can connect the at least first duct part and the thoughts duct part. The at least one first duct part and/or the third duct part can have an opening for inserting and removing the extruder and/or another tool in particular the holding member for holding the at least first duct part on the at least duct part. The opening can be closed by a cover. In particular the cover can be welded to the duct part.

According to a further favourable embodiment of the invention, the parison can be injected in the injection mold by inflating. Advantageously the at least one second duct part can be cooled after inflation. The second duct part can be cooled by the mold and/or the inflating gas. The inflating gas can be air. With the cooling the solidity of the second duct part and the hanging between the materials of the duct parts can be increased.

The object is achieved further by the apparatus by that the device contains a holding member for holding the at least one first duct part, an extruder for extruding the second material to a parison and molding the second material over a section for connection of the at least first duct part and a member for inflating the parison to form the at least one second duct part. All features and advantages of the inventive line system and the inventive method of manufacturing a line system apply analogous to the inventive apparatus and its favorable embodiments.

According to a favourable embodiment of the invention, the at least first duct part can be placed in an injection mold for the at least one second duct part and the extruder can be placed movable relative to the holding member in the injection mold.

### Brief Description of Drawings

The present invention together with the above-mentioned and other objects and advantages may best be understood from the following detailed description of the embodiments, but not restricted to the embodiments, wherein is shown schematically
- Figure 1: an isometric projection of an air duct of an internal combustion engine with two rigid duct parts which are connected by a pliable bellows;
- Figure 2: another isometric projection of the air duct of figure 1;
- Figures 3 to 5: a longitudinal section of an apparatus for manufacturing the air duct of figures 1 and 2 during different phases of a manufacturing process.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

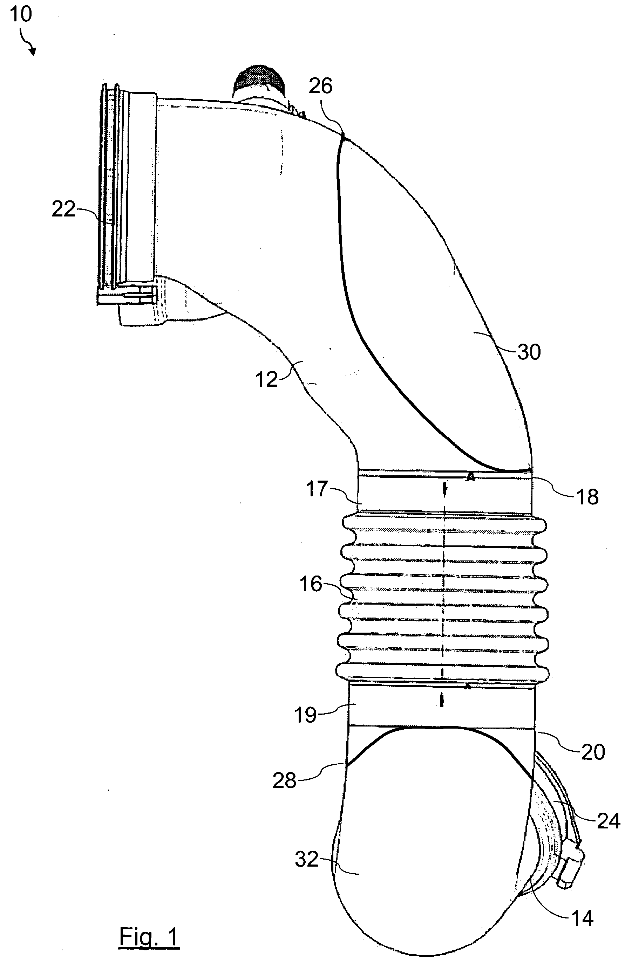

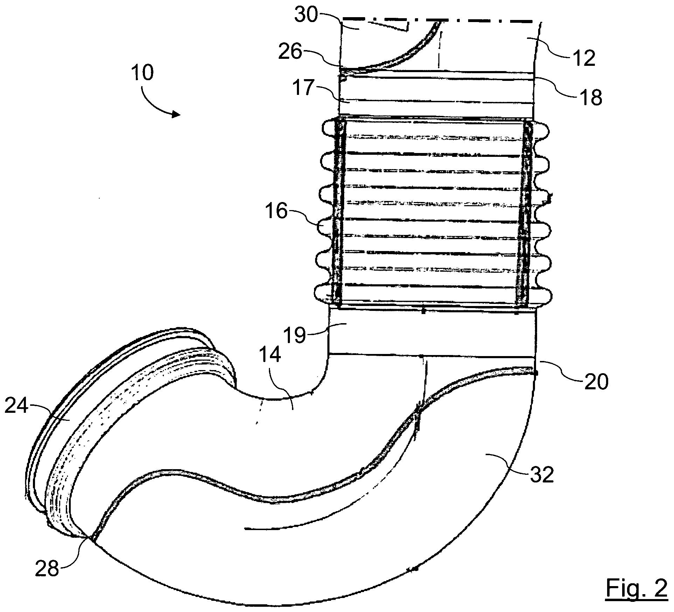

Figures 1 and 2 depict an air duct 10 of an internal combustion engine of a motor vehicle.

The air duct 10 has two rigid duct parts 12 and 14 which are connected by a pliable bellows 16. The rigid duct parts 12 and 14 and the bellows 16 are made of different materials. The rigid duct parts 12 and 14 are made of rigid plastic. The bellows 16 is made of flexible plastic. The bellows 16 is an extrusion blow molding article. The bellows 16 is injection-molded with its ends 17 and 19 to a respective section for connection 18 and 20 of the rigid duct parts 12 and 14 each. Each rigid duct part 12 and 14 has a coupling flange 22 and 24 on its free end.

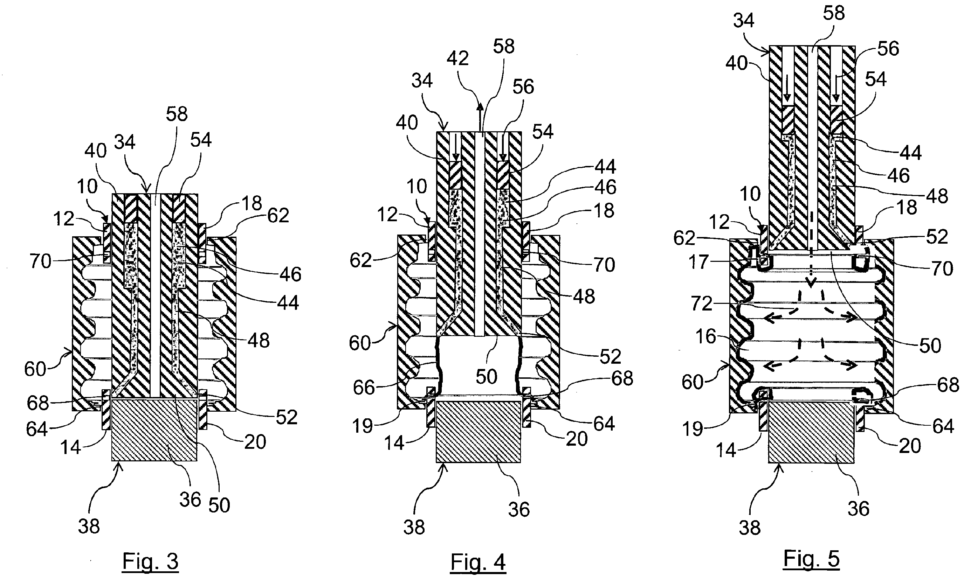

The rigid duct parts 12 and 14 are bent each. Each rigid duct part 12 and 14 has an opening 26 and 28 which are sealed with a cover 30 and 32 each. The opening 26 is for insertion and removing of an extruder 34 of an apparatus 38 for manufacturing the air duct 10. The apparatus 38 is shown in figures 3 to 5. The opening 28 is for insertion and removing of a holding member 36 of the apparatus 38. The opening 26 is aligned with the section for connection 18 of the respective rigid duct part 12. The opening 28 is aligned with the section for connection 20 of the rigid duct part 14. The section for connection 18 is coaxial to the bellows 16 at the respective end 17. The section for connection 20 is coaxial to the bellows 16 at the respective end 19.

The apparatus 38 will now be explained with the help of figures 3 to 5. The holding member 36 has a cylindrical core. It can be inserted through the opening 28 into the air duct part 14. The holding member 36 holds the section for connection 20. For the sake of clarity, in figure 3 to 5 only the sections for connection 18 and 20 are shown. The other sections of the air duct parts 12 and 14 with their openings 26 and 28 are not depicted.

The extruder 34 has a cylindrical extruder body 40. The extruder body 40 can be inserted through the opening 26 into the rigid air duct part 12. The extruder body 40 is movable relative to the holding member 36 in axial direction 42 in the section for connection 18 of the rigid air duct part 12. This is sketched out in figures 4 and 5. The extruder body 40 and the holding member 36 are coaxial. The extruder body 40 and the holding member 36 can be mounted on a not shown framework of the apparatus 38.

The extruder body 40 has an annular chamber 44 for plastic material 46. The plastic material 46 is for realizing the bellows 16. From the chamber 44 a number of channels 48 lead to a face side 50 of the extruder body 14 which is facing the holding member 36. The channels 48 each end in an annular injector section 52 which opens to the border of the face side. The injector section 52 is directed at an angle both to radial outside of the extruder body 40 and to the holding member 36. In the chamber 44 a plunger 54 is arranged. The plunger 54 is movable in axial direction to the extruder body 44 for pressing the plastic material 46 through the channels 48. The pressing direction 56 of the plunger 54 is sketched out in figures 4 and 5.

An inflation air channel 58 leads axial through the extruder body 40 and opens in the face side 60. With its other end the inflation air channel 58 is connected to a not shown air supplying device for supplying inflation air.

An injection mold 60 for the bellows 16 surrounds the extruder body 40 and the holding member 36. The mold 60 has an opening 62 for the section for connection 18 of the rigid air duct part 12 and an opening 64 for the section for connection 20 of the rigid air duct part 14. The sections for connection 18 and 20 each are fixed in the openings 62 and 64. The mold 60 can consist of two half shells. For fixing or releasing the connections 18 and 20 the half shells can be separated. The inner circumferential side of the mold 60 realizes the form of the bellows 16.

For manufacturing the air duct 10 the rigid duct parts 12 and 14 with the openings 26 and 28 are pre-casted by injection molding. Alternatively the injection mold is opening and the rigid parts stay in the injection core and only one side of the injection mold is removed. Then the rigid air duct parts 12 and 14 are mounted in the injection mold 60 so that their sections for connection 18 and 20 are placed in the respective opening 62 and 64. The injection mold 60 then holds the rigid duct parts 12 and 14 in a fixed distance.

The rigid air duct part 14 is mounted on the holding member 36 whereby the latter being inserted through the opening 28. The holding member 36 is placed in the section for connection 20 of the rigid at duct part 14. The holding member 36 then holds the rigid duct parts 12 and 14 and the injection molded 60.

The extruder body 40 is inserted into the injection mold 60 through the opening 26 and the section for connection 18 of the rigid air duct parts 12. In a starting position, which is shown in figure 3, the face side 50 abuts against the respective face side of the holding member 36. The plunger 45 is in its starting position. The chamber for plastic 44 is filled with the plastic material 46. The plastic material 46 melted by a not shown heater of the extruder 34. The plunger 54 is started to move towards the face side 50 of the extruder body 40. The plunger 54 presses the melted plastic material 46 through the channels 48 and the injection section 52. Out of the injection section 52 the plastic material 46 is extruded to an end of a parison 66. The melted plastic material 46 which forms the end of the parison 66 is pressed through clearance holes 68 of the section for connection 20. The parison 66 so is connected with its end to the section for connection 20 by overmolding.

Then the extruder body 14 is started to move away from the holding member 36 in axial direction 42. This is shown in figure 4. Simultaneously the plunger 45 this continued to move in pressing direction 46. The melted plastic material 46 is pressed continuously through the injection section 52. The parison 66 is extruded in axial direction 42. When the injection section 52 reaches the section for connection 18 of the rigid duct part 12 the movement of the extruder body 40 is stopped. This is shown in figure 5. The movement of the plunger 52 is continued. The melted plastic material 46 is pressed through clearance holes 70 in the section for connection 18. The parison 66 so also is connected to the section for connection 18 by overmolding. The movement of the plunger 54 is stopped.

Air is supplied by the air supplying device through the inflation channel 58 into the interior of the parison 66. The stream of the inflating air is sketched out by arrows 72 with broken lines. The parison 66 is inflated and pressed against the inner wall of the injection mold 60. Thus the parison 66 is formed to the bellows 16. The inflating air 72 and the injection mold 60 cool down the plastic material 46 of the bellows 16. The plastic material 46 solidifies. The connections between the bellows 16 and the sections for connections 18 and 20 are firmed.

The extruder body 40 is removed from the rigid air duct part 12 through the opening 26. The air duct 10 and the injection mold 60 are removed from the holding member 36. The injection mold 60 is removed from the air duct 10. The openings 26 and 28 are sealed with the covers 30 and 32 by welding.

The invention is not limited to an air duct 10 of an internal combustion engine of a motor vehicle. The invention can also be applied for other kinds of line systems for fluids, particularly gases or liquids. The invention can further be applied to other kinds of internal combustion engines, in particular to industrial engines.

The air duct 10 can also have less or more than two rigid duct parts 12, 14.

Instead of being bent one or both rigid duct parts 12 and 14 can also be straight. A straight rigid duct part does not need an opening 26, 28 for inserting and removing the extruder 34 or the holding member 36.

Instead of a rigid plastic at least one of the two rigid duct parts 12 and 14 can also be made of another rigid material.

At least one of the rigid duct parts 12 and 14 can be pliable as well.

The rigid duct parts 12 and 14 can be realized by another method different from injection molding. For example they can be realized by blow molding.

The air duct 10 can also have more than one bellows 16.

Instead of a flexible plastic the bellows 16 can be made of another flexible material.

Instead of the bellows 16 the air duct 10 can have another kind of duct part, in particular a pliable or a rigid duct part.

The embodiment of the apparatus 38, in particular the extruder 34, the holding member 36 and the injection mold 60, in the figures 3 to 5 is only exemplary. It can vary for example dependent on the kind of bellows 16 to be realized.

## Claims

1. Line system for a fluid, in particular an air duct (10), in particular of an internal combustion engine, in particular of a motor vehicle, having at least one first duct part (12, 14) and at least one second duct part (16) made of different materials (46) which are connected to each other, **characterized in that** the at least one second duct part (16) is an extrusion blow molding article which is extruded in a mold (60) to the at least one first duct part (12, 14).

2. Line system according to claim 1, **characterized in that** the at least one second duct part (16) is pliable.

3. Line system according to claim 1 or 2, **characterized in that** the at least one second duct part is a bellows (16).

4. Line system according to one of the previous claims, **characterized in that** the at least one first duct part (12, 14) is rigid.

5. Line system according to one of the previous claims, **characterized in that** the at least one second duct part (16) is connected with its ends (17, 19) each to a duct part (12, 14) which are made of different materials than the least one second duct part (16).

6. Method of manufacturing a line system for a fluid, in particular an air duct (10), in particular of an internal combustion engine, in particular of a motor vehicle, wherein at least one first duct part (12, 14) is made of a first material and at least one second duct part (16) is made of a second material (46) and the at least one first duct part (12, 14) and the at least one second duct part (16) are connected to each other, **characterized in that** the second material (46) is extruded to a parison (66) in a mold (60) and molded over a section for connection (18, 20) of the at least first duct part (12, 14), the parison (66) is inflated to form the at least one second duct part (16).

7. Method according to claim 6, **characterized in that** the at least first duct part (12, 14) and an extruder (34) are placed in an injection mold (60) for the at least one second duct part (16), the second material (46) is extruded by the extruder (34) for overmolding the section for connection (20) of the at least first duct part (14), the extruder (34) is moved away from the at least first duct part (14) while extruding the second material (46) to the parison (66).

8. Apparatus (38) for manufacturing a line system for a fluid, in particular an air duct (10), in particular of an internal combustion engine, in particular of a motor vehicle, with a device (34, 36) for connecting at least one first duct part (12, 14) made of a first material with at least one second duct part (16) made of a second material (46), **characterized in that** the device contains a holding member (36) for holding the at least one first duct part (14), an extruder (36) for extruding the second material (46) to a parison (66) in a mold (60) and molding the second material (46) over a section for connection (18, 20) of the at least first duct part (12, 14) and a member (58) for inflating the parison (66) to form the at least one second duct part (16).

9. Apparatus according to claim 8, **characterized in that** the at least first duct part (12, 14) is placed in an injection mold (60) for the at least one second duct part (16) and the extruder (34) is placed movable relative to the holding member (36) in the injection mold (60).

## Patentansprüche

1. Leitungssystem für ein Fluid, insbesondere ein Luftkanal (10), insbesondere einer Brennkraftmaschine, insbesondere eines Kraftfahrzeugs, mit wenigstens einem ersten Kanalteil (12, 14) und wenigstens einem zweiten Kanalteil (16) aus unterschiedlichen Materialien (46), die miteinander verbunden sind, **dadurch gekennzeichnet, dass** das wenigstens eine zweite Kanalteil (16) ein Erzeugnis aus Extrusionsblasformen ist, welches in einer Form (60) zu dem wenigstens einen ersten Kanalteil (12, 14) extrudiert ist.

2. Leitungssystem nach Anspruch 1, **dadurch gekennzeichnet, dass** das wenigstens eine zweite Kanalteil (16) biegsam ist.

3. Leitungssystem nach Anspruch 1 oder 2, **dadurch gekennzeichnet, dass** das wenigstens eine zweite Kanalteil (16) ein Faltenbalg ist.

4. Leitungssystem nach einem der vorherigen Ansprüche, **dadurch gekennzeichnet, dass** das wenigstens eine erste Kanalteil (12, 14) steif ist.

5. Leitungssystem nach einem der vorherigen Ansprüche, **dadurch gekennzeichnet, dass** das wenigstens eine zweite Kanalteil (16) mit seinen Enden (17, 19) jeweils mit einem Kanalteil (12, 14) verbunden ist, welche aus unterschiedlichen Materialien als dem wenigstens einen zweiten Kanalteil (16) hergestellt sind.

6. Verfahren zur Herstellung eines Leitungssystems für ein Fluid, insbesondere ein Luftkanal (10), insbesondere einer Brennkraftmaschine, insbesondere eines Kraftfahrzeugs, wobei wenigstens ein erstes Kanalteil (12, 14) aus einem ersten Material hergestellt ist und wenigstens ein zweites Kanalteil (16) aus einem zweiten Material (46) hergestellt ist und das wenigstens eine erste Kanalteil (12, 14) und das wenigstens eine zweite Kanalteil (16) miteinander verbunden sind, **dadurch gekennzeichnet, dass** das zweite Material (46) zu einem Rohling (66) in einer Form (60) extrudiert ist und über einen Verbindungsabschnitt (18, 20) des wenigstens ersten Kanalteils (12, 14) eingeformt wird, der Rohling (66) wird aufgeblasen, um den wenigstens einen zweiten Kanalteil (16) zu formen.

7. Verfahren nach Anspruch 6, **dadurch gekennzeichnet, dass** das wenigstens erste Kanalteil (12, 14) und ein Extruder (34) in ein Spritzgusswerkzeug (60) für das wenigstens eine zweite Kanalteil (16) platziert werden, das zweite Material (46) wird von dem Extruder (34) zum Umspritzen des Verbindungsabschnitts (20) des wenigstens ersten Kanalteils (14) extrudiert, der Extruder (34) wird von dem wenigstens ersten Kanalteil (14) entfernt, während das zweite Material (46) zu dem Rohling (66) extrudiert wird.

8. Vorrichtung (38) zur Herstellung eines Leitungssystems für ein Fluid, insbesondere ein Luftkanal (10), insbesondere einer Brennkraftmaschine, insbesondere eines Kraftfahrzeugs, mit einer Einrichtung (34, 36) zum Verbinden wenigstens eines ersten Kanalteils (12, 14) hergestellt aus einem ersten Material mit wenigstens einem zweiten Kanalteil (16) hergestellt aus einem zweiten Material (46), **dadurch gekennzeichnet, dass** die Vorrichtung ein Halteelement (36) enthält, um das wenigstens eine erste Kanalteil (14) zu halten, einen Extruder (36) zum Extrudieren des zweiten Materials (46) zu einem Rohling (66) in einer Form (60) und zum Einformen des zweiten Materials (46) über einen Verbindungsabschnitt (18, 20) des wenigstens ersten Kanalteils (12, 14) und ein Teil (58) zum Aufblasen des Rohlings (66), um den wenigstens einen zweiten Kanalteil (16) zu formen.

9. Vorrichtung nach Anspruch 8, **dadurch gekennzeichnet, dass** das wenigstens erste Kanalteil (12, 14) in einem Spritzgusswerkzeug (60) für das wenigstens eine zweite Kanalteil (16) platziert ist und der Extruder (34) ist relativ zu dem Halteelement (36) in dem Spritzgusswerkzeug (60) beweglich platziert.

## Revendications

1. Système de conduite pour un fluide, en particulier un conduit d'air (10), en particulier d'un moteur à combustion interne, en particulier d'un véhicule à moteur, ayant au moins une première partie de conduit (12, 14) et au moins une seconde partie de conduit (16), constituées de matériaux différents (46) qui sont reliées l'une à l'autre, **caractérisé en ce que** la seconde partie de conduit (16), au moins au nombre d'une, est un article de moulage par extrusion-soufflage qui est extrudé dans un moule (60) sur la première partie de conduit (12, 14), au moins au nombre d'une.

2. Système de conduite selon la revendication 1, **caractérisé en ce que** la seconde partie de conduit (16), au moins au nombre d'une, est pliable.

3. Système de conduite selon la revendication 1 ou 2, **caractérisé en ce que** la seconde partie de conduit, au moins au nombre d'une, est un soufflet (16).

4. Système de conduite selon l'une des revendications précédentes, **caractérisé en ce que** la première partie de conduit (12, 14), au moins au nombre d'une, est rigide.

5. Système de conduite selon l'une des revendications précédentes, **caractérisé en ce que** la seconde partie de conduit (16), au moins au nombre d'une, est reliée avec ses extrémités (17, 19) à des parties de conduit (12, 14) qui sont chacune constituées de matériaux différents de la seconde partie de conduit (16), au moins au nombre d'une.

6. Procédé de fabrication d'un système de conduite pour un fluide, en particulier un conduit d'air (10), en particulier d'un moteur à combustion interne, en particulier d'un véhicule à moteur, dans lequel au moins une première partie de conduit (12, 14) est constituée d'un premier matériau et au moins une seconde partie de conduit (16) est constituée d'un second matériau (46) et la première partie de conduit (12, 14), au moins au nombre d'une, et la seconde partie de conduit (16), au moins au nombre d'une, sont reliées l'une à l'autre, **caractérisé en ce que** le second matériau (46) est extrudé sur une paraison (66) dans un moule (60) et moulé par-dessus une section pour raccordement (18, 20) d'au moins la première partie de conduit (12, 14), la paraison (66) est gonflée pour former la seconde partie de conduit (16), au moins au nombre d'une.

7. Procédé selon la revendication 6, **caractérisé en ce que** la première partie de conduit (12, 14), au moins au nombre d'une, et une extrudeuse (34) sont placées dans un moule d'injection (60) pour la seconde partie de conduit (16), au moins au nombre d'une, le second matériau (46) est extrudé par l'extrudeuse (34) pour le surmoulage de la section pour raccordement (20) de la première partie de conduit (14), au moins au nombre d'une, l'extrudeuse (34) est éloignée de la première partie de conduit (14), au moins au nombre d'une, pendant l'extrusion du second matériau (46) sur la paraison (66).

8. Appareil (38) pour la fabrication d'un système de conduite pour un fluide, en particulier un conduit d'air (10), en particulier d'un moteur à combustion interne, en particulier d'un véhicule à moteur, avec un dispositif (34, 36) pour le raccordement de la première partie de conduit (12, 14), au moins au nombre d'une, constituée d'un premier matériau, avec la seconde partie de conduit (16), au moins au nombre d'une, constituée d'un second matériau (46), **caractérisé en ce que** le dispositif contient un élément de maintien (36) permettant de maintenir la première partie de conduit (14), au moins au nombre d'une, une extrudeuse (36) pour extruder le second matériau (46) sur une paraison (66) dans un moule (60) et mouler le second matériau (46) par-dessus une section pour raccordement (18, 20) de la première partie de conduit (12, 14), au moins au nombre d'une, et un élément (58) pour gonfler la paraison (66) pour former la seconde partie de conduit (16), au moins au nombre d'une.

9. Appareil selon la revendication 8, **caractérisé en ce que** la première partie de conduit (12, 14), au moins au nombre d'une, est placée dans un moule d'injection (60) pour la seconde partie de conduit (16), au moins au nombre d'une, et l'extrudeuse (34) est placée de manière mobile par rapport à l'élément de maintien (36) dans le moule d'injection (60).
